# EUROPÄISCHE PATENTANMELDUNG

(11) **EP 2 444 785 A1**
(43) Veröffentlichungstag der Anmeldung: **25.04.2012**
(21) Anmeldenummer: 11185973.2
(22) Anmeldetag: 20.10.2011
(51) Int. Cl.: G01L 21/34

(54) **Kaltkathoden-Druckmessvorrichtung vom Penning-Typ**

(30) Priorität: 22.10.2010 DE 102010049292; 03.02.2011 DE 102011010138
(71) Anmelder: VACOM Vakuum Komponenten & Messtechnik GmbH, 07749 Jena (DE)
(72) Erfinder: Iwicki, Jaroslaw, 07743 Gera (DE); Gottschalk, Patrick, 04654 Frohburg OT Eschefeld (DE); Pongrac, Ivan, 07747 Jena (DE)
(74) Vertreter: Kruspig, Volkmar

(57) **Zusammenfassung**

Die Erfindung betrifft eine Kaltkathoden-Druckmessvorrichtung vom Penning-Typ, bestehend aus einem flächigen Kathodenpaar (1) und einer in dem Kathodenpaar angeordneten zylinderförmigen Anode (2), deren Zylinderachse parallel zur Normalenrichtung des Kathodenpaares orientiert ist und einer äußeren Magnetfeldquelle (1a). Die Druckmessvorrichtung ist dadurch gekennzeichnet, dass die zylinderförmige Anode in Form einer aus mehreren drahtförmigen Anodenringen (3) bestehenden Anordnung ausgebildet ist.

## Beschreibung

Die Erfindung betrifft eine Kaltkathoden-Druckmessvorrichtung vom Penning-Typ nach dem Oberbegriff des Anspruchs 1.

Druckmessvorrichtungen, mit denen eine Druckmessung bis in den Bereich des Ultrahochvakuums möglich ist, sind in vielfältigen Ausführungsformen ein bekannter Stand der Technik. Bei derartigen Vorrichtungen wird auf unterschiedliche physikalische Messprinzipien zurückgegriffen. Insbesondere wird dabei zwischen so genannten Heißkathoden- und Kaltkathoden-Druckmessvorrichtungen unterschieden.

Bei Heißkathoden-Druckmessvorrichtungen kommen beheizte Filamente zum Einsatz, die als Elektronenquelle dienen. Die aus der Kathode emittierten Elektronen bewirken eine Ionisation von Restgasatomen innerhalb eines gegebenen Rezipienten und erzeugen dadurch einen Ionenstrom. Dieser ist druckabhängig und dessen Größe ist somit ein Maß für den im Rezipienten herrschenden Gasdruck. Heißkathoden-Druckmessvorrichtungen bewirken allerdings einen nachteiligen Wärmeeintrag. Zudem können die Filamente nur anwendungsbezogen verwendet werden und sind daher nicht universell einsetzbar. Dadurch ist die untere Messgrenze und der Einsatzbereich einer derartigen Druckmessvorrichtung durch den konkret vorliegenden Geräteaufbau limitiert. Ein weiterer Nachteil der Heißkathoden-Druckmessvorrichtung besteht außerdem darin, dass die Filamente einem hohen Verschleiß unterliegen und einem regelmäßigen Austausch unterzogen werden müssen.

Bei einer Kaltkathoden-Druckmessvorrichtung wird die Restgasionisation wie bei einer Ionengetterpumpe durch das Anlegen einer hohen Gleichspannung bewirkt, ohne dass die Kathode beheizt werden muss. Das dabei erzeugte elektrische Feld ist parallel zu einem von einer äußeren Magnetfeldquelle erzeugten Magnetfeld gerichtet.

Grundsätzlich sind für Kaltkathoden-Druckmessvorrichtungen zwei Bauformen möglich. Eine erste Bauform beruht auf einem so genannten invertierten Magnetron, eine Zweite auf einer so genannten Penning-Zelle. Bei einer Kaltkathoden-Druckmessvorrichtung vom Penning-Typ sind zwei flächige Kathoden vorgesehen, die zueinander parallel ausgerichtet sind. Die Anode befindet sich zwischen den Kathodenflächen. Sie ist in Form eines Hohlzylinders ausgebildet, dessen Längsachse parallel zu den Normalenachsen der flächigen Kathoden orientiert ist.

Kaltkathoden-Druckmessvorrichtungen vermeiden die filamentbezogenen Probleme. Allerdings verschmutzen auch die Kaltkathoden leicht, was ebenfalls verhältnismäßig kurze Wartungsintervalle nach sich zieht. Außerdem weisen Kaltkathoden-Druckmessvorrichtungen besonders bei niedrigen Drücken im Bereich des Ultrahochvakuums relativ hohe Zündzeiten auf und es besteht die zusätzliche Gefahr, dass die Entladung erlischt. Dadurch ist die Anwendung von Kaltkathoden-Druckmessvorrichtungen bei niedrigen Drücken ebenfalls nur eingeschränkt möglich. Weil Kaltkathoden-Druckmessvorrichtungen bedingt durch ihre Bauart eine Verwandtschaft zu Ionengetterpumpen aufweisen, besitzen sie somit ein gewisses Saugvermögen. Sie verfälschen somit die Druckmessung.

Es ist somit Aufgabe der Erfindung, eine Kaltkathoden-Druckmessvorrichtung anzugeben, deren Saugvermögen verringert ist, die Druckmessungen bis in den unteren Bereich des Ultrahochvakuums (UHV) und des extremen Hochvakuums (XHV) hinein ermöglicht und auch unter diesen Bedingungen möglichst kurze Zündzeiten sichert. Die gesuchte Kaltkathoden-Druckmessvorrichtung soll außerdem längere Betriebsdauern im Vergleich zu den aus dem Stand der Technik bekannten Vorrichtungen gewährleisten.

Die Aufgabe wird mit einer Kaltkathoden-Druckmessvorrichtung nach den Merkmalen des Anspruchs 1 gelöst. Die Unteransprüche enthalten vorteilhafte und/oder zweckmäßige Ausführungsformen der erfindungsgemäßen Vorrichtung.

Es wird von einer Kaltkathoden-Druckmessvorrichtung vom Penning-Typ ausgegangen. Diese besteht aus einem flächigen Kathodenpaar und einer in dem Kathodenpaar angeordneten zylinderförmigen Anode, deren Zylinderachse parallel zur Normalenrichtung des Kathodenpaares orientiert ist. Erfindungsgemäß ist die Kaltkathoden-Druckmessvorrichtung nun dadurch gekennzeichnet, dass die zylinderförmige Anode aus mehreren drahtförmigen, beabstandeten Anodenringen besteht.

Durch die ringförmige und geteilte Gestaltung der Anode ist zum einen die bekannte Feldverteilung des Anodenzylinders im Vakuum gesichert. Andererseits ist die Oberfläche der Anode im Vergleich zu der herkömmlichen Zylinderform deutlich reduziert. Dadurch weist die Anode ein deutlich niedrigeres Saugvermögen auf. Die minimierte Oberfläche des Anodenzylinders geht außerdem mit einer Maximierung des Leitwertes der Druckmessvorrichtung einher. Dadurch wird das Zündverhalten entscheidend verbessert. Bedingt durch die minimierte Oberfläche werden außerdem die Verschmutzungsquellen der Druckmessvorrichtung deutlich eingeschränkt.

Bei einer zweckmäßigen Ausgestaltung weisen die Anodenringe verschiedene Radien auf. Dadurch wird berücksichtigt, dass der Strom zwischen Anode und Kathode druckabhängig ist und bei einem gegebenen Druck vom Radius der Anode abhängt. Die verschiedenen Ringradien gewährleisten somit einen optimalen Strom innerhalb der jeweils gegebenen Druckbereiche und bewirken eine Funktionsanpassung der Kaltkathoden-Druckmessvorrichtung an die im Rezipienten jeweils vorliegenden Druckverhältnisse.

Bei einer vorteilhaften Ausführungsform sind vier Anodenringe vorgesehen. Dabei weisen zwei Anodenringe einen ersten Radius und zwei Anodenringe einen zweiten Radius auf, der größer als der erste Radius ist. Bei einer Variante dieser Ausführungsform sind die in einem Mittelabschnitt der zylinderförmigen Anode angeordneten Anodenringe vergrößert ausgeführt, während der Radius der Anodenringe zu den Enden der zylinderförmigen Anode hin abnimmt.

Diese Gestaltung kann auch invertiert sein. Dabei weisen die in einem Mittelabschnitt der zylinderförmigen Anode angeordneten Anodenringe einem kleineren Radius im Vergleich zu den Radien der an den Enden der zylinderförmigen Anode angeordneten Anodenringe auf.

Für die Anodenringe muss nicht unbedingt eine Kreisform vorgesehen sein. Bei einer möglichen Ausführungsform sind diese elliptisch, jedoch bevorzugt symmetrisch ausgebildet.

Bei einer zweckmäßigen Ausführungsform weist mindestens einer der Anodenringe einen Radius auf, der mindestens das 1,2-fache des Radius des nächst kleineren Anodenrings beträgt. Eine solche Gestaltung erleichtert das Zündverhalten der Elektrodenanordnung. Dabei wirkt der größte Anodenring als Zündring, der den Entladestrom in Gang setzt.

Natürlich ist auch eine Anordnung möglich, bei der sämtliche Anodenringe einen gleichen Radius aufweisen.

Bei einer vorteilhaften Ausführungsform ist die gesamte Anordnung der Anodenringe aus einem einheitlichen Materialblock herausgearbeitet, vorzugsweise herausgefräst oder herausgeschnitten. Bei einer derartigen Gestaltung weisen die Anodenringe eine sehr genaue Maßhaltigkeit auf, die sehr geringe Fertigungstoleranzen ermöglicht.

Bei einer vorteilhaften Ausgestaltung ist im Bereich der Druckmessvorrichtung eine lokale Heizeinrichtung angeordnet, die eine lokale Druckerhöhung erzeugt und dadurch das Zündverhalten verbessert. Diese ist vor allem während des Zündvorgangs aktiviert. Die Heizeinrichtung kann insbesondere in Form eines Pirani-Sensors ausgebildet sein.

Zur Minimierung der Verschmutzung besteht das Kathodenpaar aus Edelstahl, elektropoliertem Edelstahl oder einem Zirkonium-, Titan- oder Tantal-Werkstoff.

Die erfindungsgemäße Kaltkathoden-Druckmessvorrichtung soll nachfolgend anhand von Ausführungsbeispielen näher erläutert werden. Zur Verdeutlichung dienen die Figuren 1 bis 7. Es werden für gleiche und gleich wirkende Teile die selben Bezugszeichen verwendet.

Es zeigen:
- Fig. 1: eine beispielhafte Prinzipdarstellung der Kaltkathoden-Druckmessvorrichtung,
- Fig. 2: beispielhafte Ausführungsformen der Kathodenanordnung,
- Fig. 3: Anoden und Anodenringe in einer ersten beispielhaften Ausführungsform,
- Fig. 4: Anoden und Anodenringe in weiteren beispielhaften Ausführungsformen,
- Fig. 5: relevante Gestaltungsparameter der Kaltkathoden-Druckmessvorrichtung,
- Fig. 6: ein beispielhaftes Ionisations-Vakuummeter mit der KaltkathodenDruckmessvorrichtung,
- Fig. 7: beispielhafte Ausführungsformen eines Magnetjoches.

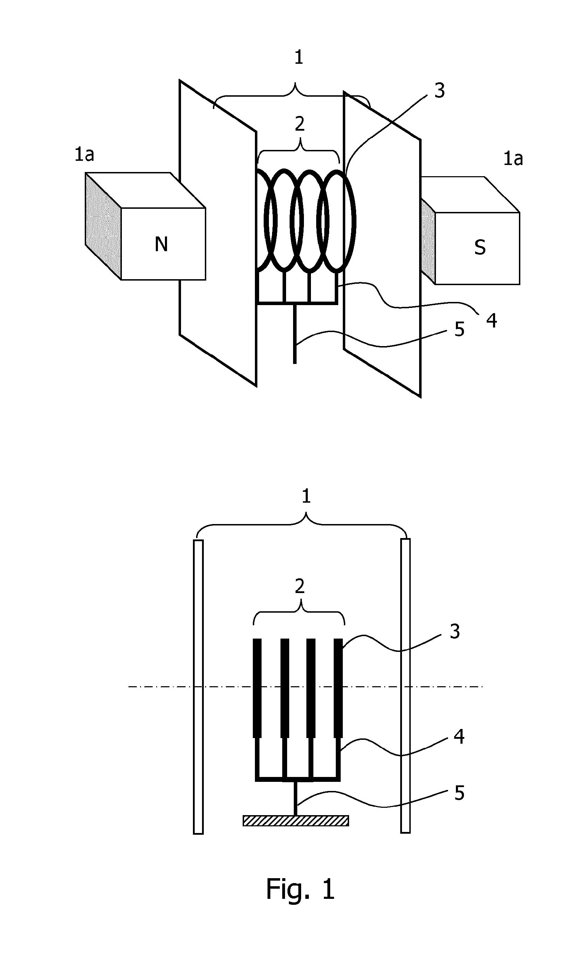

Fig. 1 zeigt eine beispielhafte Prinzipdarstellung der erfindungsgemäßen Kaltkathoden-Druckmessvorrichtung. Die Vorrichtung besteht aus einem flächigen Kathodenpaar 1, einer Magnetfeldquelle 1a mit einem Nord- und einem Südpol und einer innerhalb des Kathodenpaares angeordneten approximiert zylinderförmigen Anode 2. Das Kathodenpaar ist im hier gezeigten Beispiel in Form von parallel zueinander ausgerichteten ebenen Platten ausgebildet. Die zylinderförmige Anode ist mit ihrer Längsrichtung parallel zu der hier als Strich-Punkt-Linie angedeuteten Flächennormalen der Platten des Kathodenpaares orientiert. Sie ist in mehrere Anodenringe 3 unterteilt. Diese liegen im Wesentlichen parallel zueinander, wobei deren Symmetrieachsen mit der Längsachse der zylinderförmigen Anode zusammenfallen.

Die Anodenringe 3 sind über eine gabelförmige Halterung 4 zueinander positioniert. Die gabelförmige Halterung ist über einen Steckverbinder 5 auf ein positives elektrisches Potential geschaltet.

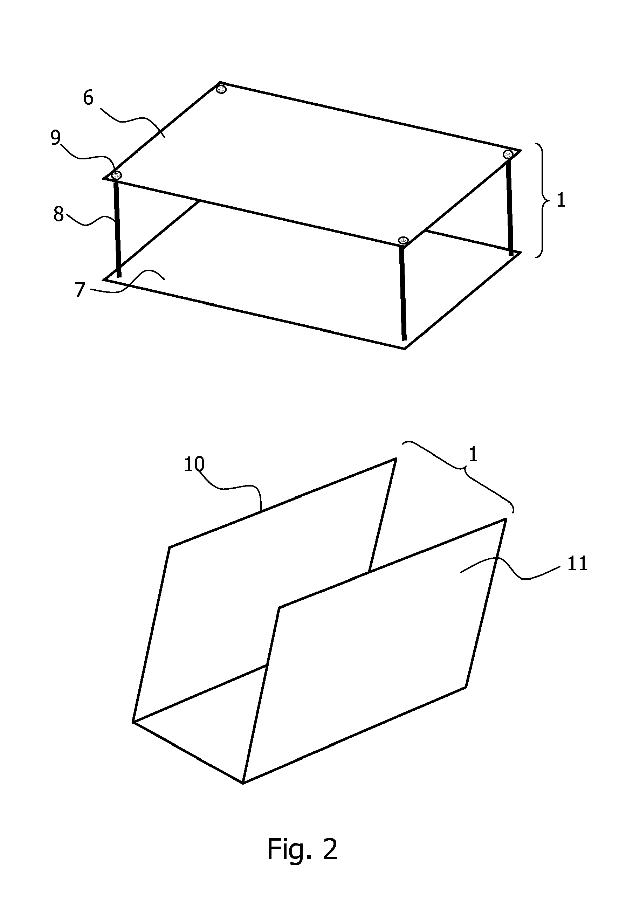

Das Kathodenpaar 1 kann auf verschiedene Weise gestaltet sein, wie Fig. 2 beispielhaft zeigt. Bei dem oben dargestellten Beispiel handelt es sich um ein Kathodenpaar in einer so genannten Doppeldecker-Ausführung. Das Kathodenpaar besteht aus zwei Platten 6 und 7, die über eine Reihe von Abstandshaltern 8 auf Distanz gehalten werden. Diese bestehen beispielsweise aus leitfähigen oder isolierenden Stäben, die an einer Reihen von Verbindungspunkten 9 mit den Platten 6 und 7 verbunden sind. Hierzu können Schraub- oder Nietverbindungen zum Einsatz kommen.

In dem in Fig. 2 unten dargestellten Beispiel ist das Kathodenpaar 1 als Teil einer U-Kathode ausgebildet. Dabei handelt es sich um ein U-förmig abgekantetes Blech, dessen Schenkel 10 und 11 parallel zueinander orientiert sind und gegebenenfalls über hier nicht dargestellte Abstandshalter in ihrer Lage fixiert sind. Welche der beiden Formen bevorzugt wird, hängt dabei von den Schweißeigenschaften des für das Kathodenpaares vorgesehenen Materials ab. Die Doppeldeckerform wird für ein Kathodenpaar aus Edelstahl, die U-Form für ein Kathodenpaar aus Tantal bevorzugt. Die Dicke jeweils einer Platte des Kathodenpaares beträgt ca. 0,5 mm oder mehr.

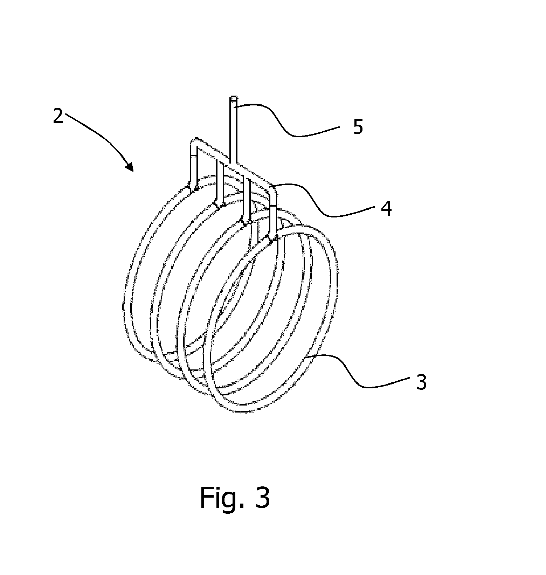

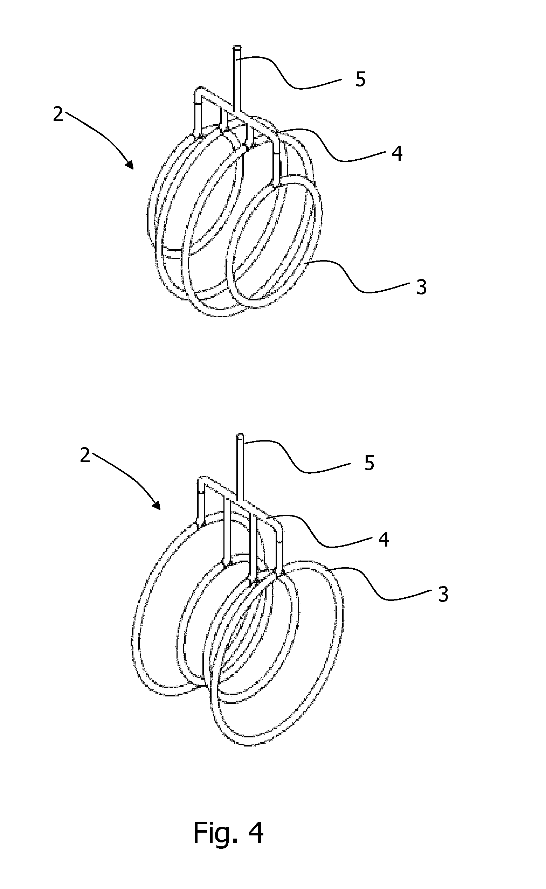

Die Figuren 3 und 4 zeigen beispielhafte Ausführungsformen der Anode 2 und beispielhafte Ausführungsformen der Anodenringe 3. Die hier gezeigten Ausführungsformen der Anoden enthalten vier Anodenringe. Bei der in Fig. 3 gezeigten Ausführungsform weisen sämtliche Anodenringe den gleichen Durchmesser auf. Bei den Ausführungsformen aus Fig. 4 sind die Durchmesser der Anodenringe unterschiedlich gestaltet.

Die Anodenringe 3 sitzen auf einer gabelförmigen Halterung 4 auf. Diese gesamte Anordnung, mindestens jedoch die Anodenringe allein ist aus einem einheitlichen Materialblock herausgearbeitet, insbesondere herausgefräst, herausgebohrt oder herausgeschnitten. Dadurch weist die gesamte Anordnung einer sehr genaue Maßhaltigkeit und Formgenauigkeit auf, bei der die Anodengeometrie mit sehr engen Toleranzen definiert ist. Außerdem werden bei einer derartigen Ausführungsform Verbindungsstellen in Form Löt- oder Schweißpunkten mit den dabei auftretenden Forminhomogenitäten vermieden.

Natürlich ist es auch möglich, die Anodenringe durch ein Biegeverfahren zu fertigen. In einem solchen Fall bestehen die Anodenringe aus kreisförmig gebogenen Drahtstücken mit einem geraden Ende, das als Teil der gabelförmigen Halterung 4 ausgebildet ist. Die elektrisch leitende Verbindung der Anodenringe erfolgt über die gabelförmige Halterung. Anstelle der gabelförmigen Halterung kann auch eine Konstruktion aus einem Blechstreifen und darauf aufgelöteten oder geschweißten Anodenringen verwendet werden.

Wie die Ausführungsformen aus Fig. 4 zeigen, können die einzelnen Anodenringe verschieden groß ausgebildet sein. Bei den hier dargestellten Ausführungsformen sind jeweils zwei kleinere und zwei größere Ringe vorgesehen.

Bei der in Fig. 4 oben dargestellten Ausführungsform sind zwei Anodenringe mit einem kleinen Radius vorgesehen, zwischen denen zwei größere Anodenringe angeordnet sind. Diese können ebenfalls verschiedene Radien aufweisen. Bei einer derartigen Gestaltung dient einer der größeren Ringe als Zündring für den Entladestrom.

Bei der in Fig. 4 unten dargestellten Ausführungsform sind zwei größere Anodenringe vorgesehen, die zwei kleinere Anodenringe einschließen. Dabei weisen entweder die größeren als auch die kleineren Anodenringe jeweils gleiche Radien auf oder die größeren Anodenringe sind untereinander ebenfalls abgestuft.

Die in Fig. 4 gezeigten Ringgeometrien sind auf eine Anodenform hin ausgebildet, die einen relativ hohen Entladestrom bei möglichst niedrigen Druckdekaden, insbesondere bei einem Druck von p < 10⁻⁹ mbar gewährleistet.

Bei weiteren hier nicht gezeigten beispielhafte Anoden und Ausführungsformen der Anodenringe bestehen diese aus zwei separaten Halbkreisen oder mehreren Kreisbogenabschnitten. Sofern die Anodenringe aus gebogenem Draht bestehen, sind die Kreisbogenabschnitte miteinander verlötet oder verschweißt. Die Kreisbogenabschnitte bilden in ihrer Gesamtheit keine Kreisform, sondern eine elliptische oder eine Kreissegmentform mit Knickpunkten aus.

Zur Verbindung der Anodenringe und zum Ausbilden der gabelförmigen Halterung wird bei den Ausführungsformen aus Fig. 4 ausschließlich ein Steg oder ein Drahtstück verwendet. Eine derartige Verbindung minimiert die Oberfläche und vermeidet scharfe Ecken und Kanten. Die Anode bzw. die Anodenringe werden zweckmäßigerweise mittels eines Laserschweißverfahrens verbunden. Die Anodenringe werden auf eine möglichst exakte Parallelität zueinander überprüft.

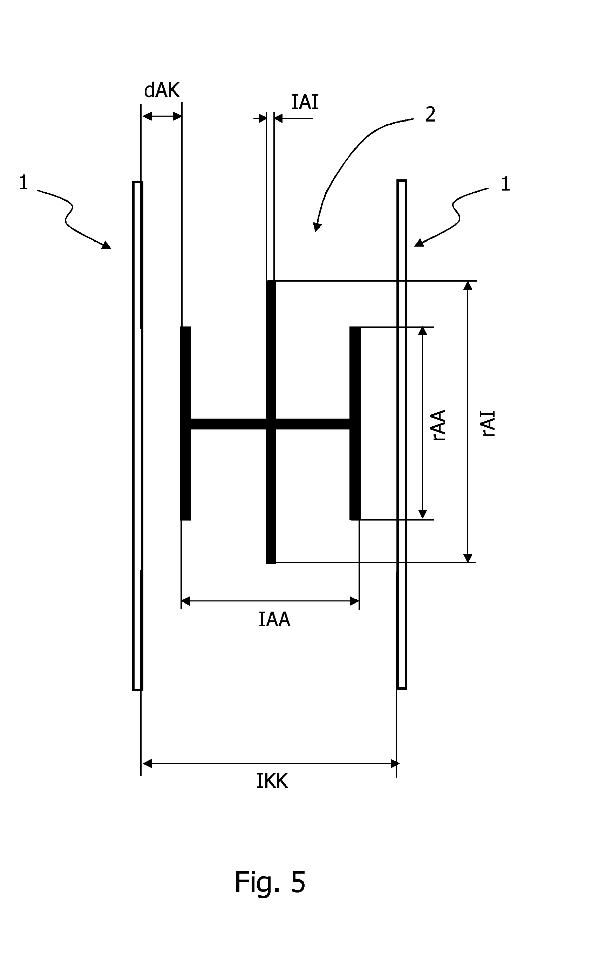

Fig. 5 zeigt eine Übersicht über wichtige Gestaltungsparameter der Kaltkathoden-Druckmessvorrichtung am Beispiel einer aus drei Ringen bestehenden Anode. Die nachfolgend genannten Maße lassen sich sinngemäß auf die in den Figuren 3 und 4 gezeigten Ausführungsformen übertragen.

Die Platten des Kathodenpaares nehmen einen Abstand IKK zueinander ein. Die Anode befindet sich zweckmäßigerweise in einem äquidistanten Abstand dAK zwischen den Platten des Kathodenpaares. Die Gesamtlänge der Anode, die dem Abstand der beiden äußersten Anodenringe entspricht, ist in der Figur mit IAA bezeichnet. Die Anodenringe selbst weisen eine Dicke IAI auf. Im Allgemeinen sind die Anodenringe unterschiedlich groß. Sie weisen einen größten Doppelradius rAI und einen kleinsten Doppelradius rAA auf.

Im Allgemeinen wird von einem kleinsten Doppelradius rAA von ca. 8 mm als Grundmaß ausgegangen, wobei der Doppelradius rAI des größeren
Anodenringes ca. 1,5 mal so groß ist und bei dem hier gewählten Beispiel ca. 12 mm beträgt. Bei den Ausführungsformen aus Fig. 3 und 4 und dem hier vorliegenden Beispiel entspricht die Länge IAA der Anode im wesentlichen dem Doppelradius rAI des größten Anodenringes. Dabei sind die Anodenringe gleichmäßig und symmetrisch über die Anode verteilt, sodass die Gesamtlänge IAA der Anode im Falle von drei Anodenringen halbiert und im Falle von vier Anodenringen jeweils gedrittelt ist.

Der Abstand dAK zwischen den äußersten Anodenringen und den Platten des Kathodenpaares beträgt beispielsweise 3 bis 12 mm. In der Regel erweisen sich ca. 6 mm als zweckmäßig, sodass der Abstand IKK der Platten des Kathodenpaares ca. 12 mm größer als die Länge der Anode ist und damit ca. 24 mm und mehr beträgt. Die Dicken der Anodenringe können unabhängig von der Größe der Anodenringe selbst sein. Sie betragen ca. 1 bis 4 mm oder mehr.

Die Anode besteht im einfachsten Fall aus Aluminium oder Edelstahl. Das Kathodenpaar kann ebenfalls aus Edelstahl gefertigt sein. Titan oder Tantal bzw. titan- und tantalhaltige Legierungen können jedoch auch als Kathodenmaterial verwendet werden. Diese weisen eine geringere Sputteranfälligkeit auf und sind somit zur Verwendung als Kaltkathode besonders gut geeignet.

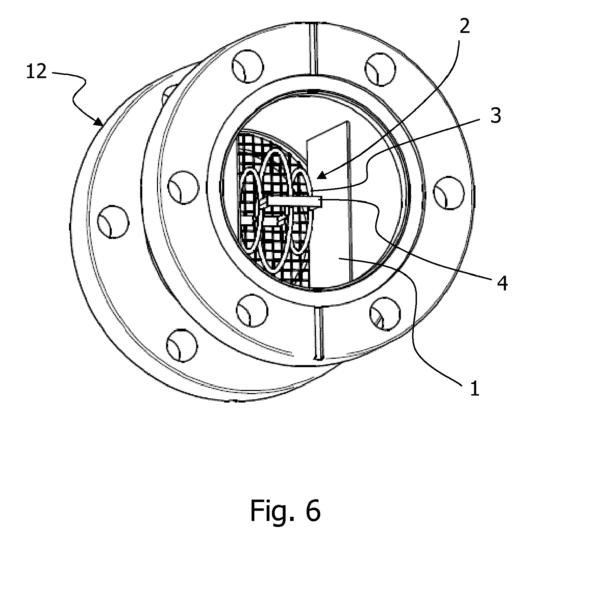

Fig. 6 zeigt einen beispielhaften praktischen Aufbau eines Ionisationsvakuummeters, das die erläuterte Kaltkathoden-Druckmessvorrichtung enthält. Das Kathodenpaar 1 und die Anode 2 sind in ein Gehäuse 12 eingebaut, das an den Rezipienten angeflanscht ist. Die Anode ist mit einer mit einem hohen Potential versehene Spannungszuführung verbunden. Die Spannungszuführung und das Gehäuse 12 sind miteinander verschraubt. Das flanschartige Gehäuse ist von einer hier nicht gezeigten Magnetanordnung umgeben.

Die Zündzeit der Druckmessvorrichtung hängt stark von der Anodengeometrie, insbesondere von der Größe der Anodenringe, ab. Dabei gilt, dass sich die Zündzeit mit wachsendem Anodenradius verkürzt. Bei einem Druck von 10⁻⁷ mbar und einem Anodendurchmesser von 12 mm beträgt die Zündzeit etwa 11 s s und verlängert sich bei einem Druck von 10⁻⁹ mbar bei diesem Anodendurchmesser auf 440 s. Als weitere Einflussgröße ist der Abstand zwischen den Anodenringen zu beachten. Die Zündzeit kann mit wachsendem Abstand zwischen den Anodenringen erheblich reduziert werden. Versuche haben gezeigt, dass eine Vergrößerung des Abstandes zwischen den Anodenringen um 4 mm bei einer ansonsten gleichen Anodengeometrie die Zündzeit auf 1/4 bis 1/6, in Einzelfällen auf 1/8 der bei der Verwendung einer herkömmlichen Anode benötigten Zündzeit verkürzt.

Eine Reduzierung der Zündzeit lässt sich auch durch die Verwendung von Tantal als Anodenmaterial erreichen. Im Vergleich zu Edelstahl ist eine Reduktion auf 1/4 möglich. Eine Verwendung von Titan reduziert die Zündzeit ebenfalls auf 2/3 bis auf die Hälfte der ursprünglichen Zündzeit.

Bei dem Betrieb der Druckmessvorrichtung sind besonders die Fehlerströme zu beachten und zu minimieren, die durch Feldemissionen an der Kathode entstehen, dabei in die Gasentladung zugeführt werden und das Messergebnis verfälschen. Derartige Fehlerströme sind besonders dann problematisch, wenn Druckmessungen im extremen Hochvakuum (XHV) erfolgen sollen.

Um diesen Fehlerströmen zu begegnen, erweist es sich als notwendig, die Oberflächen des Kathodenpaares so glatt wie möglich zu gestalten und sämtliche Elektroden möglichst kantenfrei auszuführen. Versuche zeigen, dass sich der durch die Feldemission verursachte Fehlerstrom von ca. 200 pA bei unbehandeltem Edelstahl um etwa ein Viertel bei elektropoliertem Edelstahl senken lässt. Die Verwendung von Titan oder Tantal als Elektrodenmaterial des Kathodenpaares reduziert den Fehlerstrom auf ca. 170 bis 160 pA.

Bei dem Betrieb der Druckmessvorrichtung ist auch der Einfluss des Magnetfeldes auf den Entladungsstrom zu beachten. Dabei ist vor allem die Justierung des Magnetfeldes zu berücksichtigen.

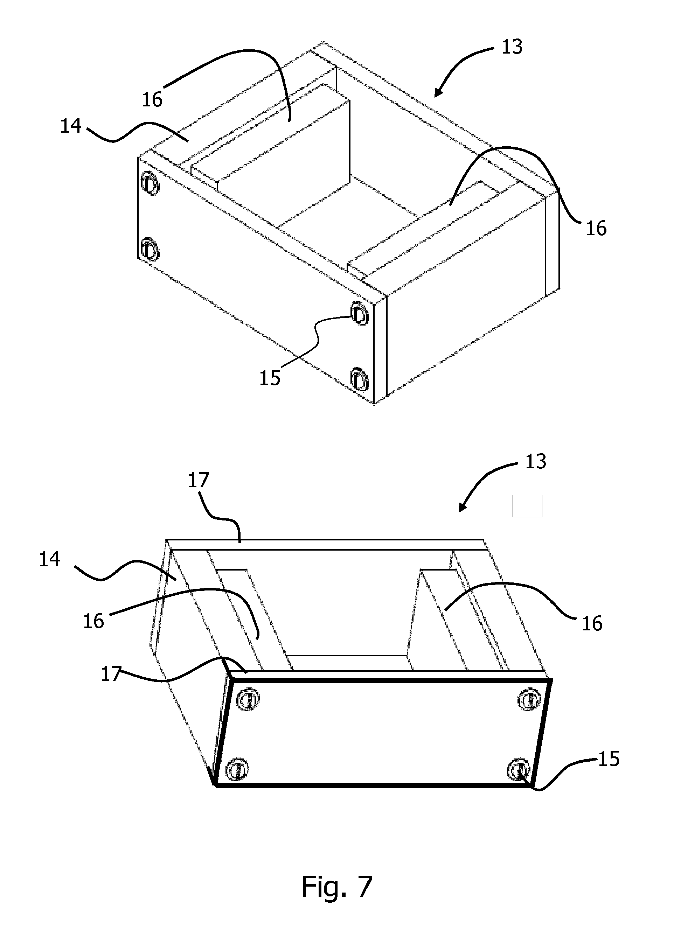

Fig. 7 zeigt hierzu eine beispielhafte Ausführungsform eines Magnetjoches 13 in zwei verschiedenen Ausführungsformen. Das Magnetjoch besteht in der oben gezeigten Ausführungsform aus einem Jochkäfig 14, der aus einem magnetisch leitenden Material besteht. Der Jochkäfig ist aus einzelnen Elementen zusammengesetzt, die über Befestigungsmittel, im hier gezeigten Falle Schrauben 15, miteinander verbunden sind. Der Jochkäfig nimmt im Inneren zwei Magnetkörper 16 auf, die aus einem permanentmagnetischen Material bestehen. Zweckmäßigerweise wird auf Neodym-Eisen-Bor-Magnete zurückgegriffen. Diese sichern eine hohe magnetische Flussdichte bei einem minimalen Kostenaufwand.

Natürlich können auch Samarium-Cobalt oder auch Hartferritmagnete verwendet werden. Der Jochkäfig kann auch aus einem oder mehreren Elementen bestehen, die gebogen, gestanzt oder auch zusammengeschweißt werden.

Zur Sicherung eines homogenen Magnetfeldes und möglichst geschlossener und auf das Joch konzentrierter Magnetfeldlinien kann auf die in Fig. 7 unten dargestellte Ausführungsform zurückgegriffen werden. Bei dieser Ausführungsform ist das Joch durch außen angeordnete Stahlstreifen 17 verstärkt, die das Joch u-förmig umgreifen. Die Stahlstreifen lenken die magnetischen Feldlinien in das Innere des Jochs ab. Durch eine derartige Gestaltung lässt sich der Entladungsstrom um bis zu 7% steigern und so der Messbereich der Kaltkathoden-Druckmessvorrichtung besonders bei niedrigen Drücken auf Bereiche von weniger als 10⁻¹⁰ mbar erweitern.

Wie bereits erwähnt weisen Kaltkathoden-Druckmessvorrichtungen bauartbedingt eine gewisse Saugwirkung auf, die den Messwert des Druckes verfälschen. Diese Saugwirkung ist durch die in Anodenringe geteilte Gestaltung der Anode gegenüber herkömmlichen Kaltkathoden-Druckmessvorrichtungen reduziert. Die geteilte Konfiguration der Anode führt dazu, dass sich weniger Gettermaterial an der Anodenoberfläche absetzen kann. Eine Kontamination der Anode ist weitgehend vermeidbar, sofern die Elektrodengeometrie mit einem geeigneten Kathodenmaterial, beispielsweise Titan oder Tantal, kombiniert wird.

Bei dem beschriebenen Aufbau sind eine Reihe möglicher Fehlerquellen zu beachten. Sofern Anodenringe mit einer Kreisform Verwendung finden, besteht eine wichtige erste Fehlerquelle darin, dass die Anodenringe geringfügig und vor allem unsymmetrisch von der idealen Kreiskontur in Form von Auswuchtungen abweichen. Diese Abweichungen können dazu führen, dass die Elektronen auf ihren Bahnen behindert werden, wodurch schließlich die Ionisationswahrscheinlichkeit reduziert werden kann.

Eine weitere Fehlerquelle besteht in einer zu ungenauen Ausrichtung zwischen der Anode und der Kathode. Dabei tritt insbesondere der Fehler auf, dass die Achse einzelner Anodenringe oder die Längsachse der Anode als ganzes nicht exakt parallel zur Kathodennormale orientiert ist. Dadurch wird der Entladungsstrom reduziert oder er nimmt schwankende Werte an. Eine weitere Fehlerquelle besteht in einer ungenügenden Ausrichtung und Fixierung der Magnetfeldquelle. Eine nicht optimale Ausrichtung des Magnetfeldes zum elektrischen Feld der Elektrodenanordnung führt zu einer Abnahme der durch das Magnetfeld erzeugten Lorentzkraft, wodurch sich die von den Elektronen durchlaufene Wegstrecke und damit die Ionisationswahrscheinlichkeit verringert.

Um diese Ausrichtungsfehler zu minimieren, ist es zweckmäßig, vorrichtungsseitige Montagehilfen und Führungsmittel vorzusehen. Ein erstes Führungsmittel besteht dabei in Form einer Nut-Federanordnung zum Einschieben und Einsetzen der Anode zwischen das Kathodenpaar, wodurch die Längsache der Anode relativ zur Kathodenanordnung genau einjustiert ist.

Ein zweites Führungsmittel besteht in Form elektrisch und magnetisch inerter Stege oder Klammern, die zwischen die Anodenringe eingebracht sind, diese auf Distanz halten und somit eine genau definierte Anodengeometrie sicherstellen. Diese Stege sind entweder für einen permanenten Einsatz vorgesehen oder dienen nur zur vorübergehenden Stabilisierung der Lage der Anodenringe während des Montageprozesses. Im letzteren Fall werden die Stege oder Klammern nach dem Zusammenfügen der Druckmessvorrichtung aus der Anordnung entfernt.

Für die genaue Ausrichtung zwischen äußerer Magnetfeldquelle und Elektrodenanordnung erweist sich ein das Gehäuse der Druckmessvorrichtung umgebender Justierkäfig als besonders zweckmäßig. Dieser besteht aus lagegenau bezüglich der Elektrodenanordnung positionierten Montagepunkten, auf die das Magnetfeldjoch aufgesetzt und über die es auch arretiert wird. Diese Montagepunkte sind zweckmäßigerweise so angeordnet, dass diese mit entsprechenden Gegenstücken an dem Magnetfeldjoch nur auf eine bestimmte Weise passgenau zusammengefügt werden können, wobei dadurch die genaue Lage des Magnetfeldjoches festgelegt ist.

Zusammenfassend ist festzustellen, dass die beschriebene Kaltkathoden-Druckmessvorrichtung und das darauf aufbauende Ionisationsvakuummeter einen annähernd linearen Verlauf zwischen dem gemessenen Entladestrom und einem mittels eines Referenzsensors gemessenen Druck aufweist. Die Kennlinie zwischen dem Entladestrom I und dem Druck p im Rezipienten folgt dabei in einem weiten Bereich dem für derartige Anordnungen bekannten Potenzgesetz I = Cpⁿ. Dabei ist C eine von der Gasart abhängige Vakuummeterkonstante. Mit der beschriebenen Anordnung lässt sich über einen Zeitraum von ca. 100 Stunden auch in einem Druckbereich von ca. 10⁻¹¹ mbar ein stabiles Verhalten erreichen. Dabei werden Entladungsströme erzeugt, die auch noch bei einem minimalen Druck von 3.10⁻¹¹mbar, also im Ultrahochvakuum, noch hinreichend genau messbar sind. Zum Erzeugen eines hohen Entladungsstromes auch bei tiefen Drücken ist allerdings ein relativ starkes Magnetfeld von ca. 150 mT erforderlich. Dabei kann die Zündzeit der Vorrichtung dadurch vermindert werden, indem einer der Anodenringe einen größeren Doppelradius aufweist.

Bedingt durch die optimierte Anodengeometrie mit reduzierter Anodenoberfläche ist mit einer Mindestlaufzeit der Kaltkathoden-Druckmessvorrichtung von ca. 8 Jahren bei einem über diesen Zeitraum eintretenden Empfindlichkeitsverlust von etwa 2% zu rechnen.

Die Kaltkathoden-Druckmessvorrichtung wurde anhand von Ausführungsbeispielen erläutert. Weitere Ausführungsformen ergeben sich durch fachmännisches Handeln und insbesondere durch die Unteransprüche.

### Bezugszeichenliste

- 1: Kathodenpaar
- 1a: Magnetfeldquelle
- 2: Anode
- 3: Anodenring
- 4: Halterung
- 5: Steckverbinder
- 6: erste Kathodenplatte
- 7: zweite Kathodenplatte
- 8: Abstandshalter
- 9: Verbindungspunkt
- 10: erster Schenkel
- 11: zweiter Schenkel
- 12: Gehäuse
- 13: Magnetjoch
- 14: Jochkäfig
- 15: Schraube
- 16: Magnetkörper
- 17: Stahlstreifen
- dAK: Abstand Kathode-Anode
- IAA: Anodenlänge
- IAI: Anodenringdicke
- IKK: Kathodenpaarabstand
- rAI: maximaler Anodenring-Doppelradius
- rAA: minimaler Anodenring-Doppelradius

## Patentansprüche

1. Kaltkathoden-Druckmessvorrichtung vom Penning-Typ, bestehend aus einem flächigen Kathodenpaar (1) und einer in dem Kathodenpaar angeordneten zylinderförmigen Anode (2), deren Zylinderachse parallel zur Normalenrichtung des Kathodenpaares und einer äußeren Magnetfeldquelle (1a) orientiert ist,
**dadurch gekennzeichnet, dass**
die zylinderförmige Anode durch mehrere ring- oder drahtförmige Elemente (3) approximiert ist.

2. Kaltkathoden-Druckmessvorrichtung nach Anspruch 1,
**dadurch gekennzeichnet, dass**
die Elemente als Anodenringe (3) verschiedene Radien aufweisen.

3. Kaltkathoden-Druckmessvorrichtung nach Anspruch 2,
**dadurch gekennzeichnet, dass**
vier Anodenringe (3) vorgesehen sind, wobei zwei Anodenringe einen ersten Radius und zwei Anodenringe einen im Vergleich zu dem ersten Radius größeren Radius aufweisen.

4. Kaltkathoden-Druckmessvorrichtung nach einem der vorhergehenden Ansprüche,
**dadurch gekennzeichnet, dass**
die in einem Mittelabschnitt der zylinderförmigen Anode (2) angeordneten Anodenringe (3) einem größeren Radius im Vergleich zu den an den Enden der zylinderförmigen Anode angeordneten Anodenringen aufweisen.

5. Kaltkathoden-Druckmessvorrichtung nach einem der vorhergehenden Ansprüche,
**dadurch gekennzeichnet, dass**
die in einem Mittelabschnitt der zylinderförmigen Anode (2) angeordneten Anodenringe (3) einem kleineren Radius im Vergleich zu den an den Enden der zylinderförmigen Anode angeordneten Anodenringen aufweisen.

6. Kaltkathoden-Druckmessvorrichtung nach einem der vorhergehenden Ansprüche,
**dadurch gekennzeichnet, dass**
die Anodenringe (3) eine elliptische oder mandelförmige Querschnittsform aufweisen.

7. Kaltkathoden-Druckmessvorrichtung nach einem der vorhergehenden Ansprüche,
**dadurch gekennzeichnet, dass**
mindestens einer der Anodenringe (3) einen Radius aufweist, der mindestens das 1,2-fache des Radius des nächst kleineren Anodenrings aufweist.

8. Kaltkathoden-Druckmessvorrichtung nach einem der vorhergehenden Ansprüche,
**dadurch gekennzeichnet, dass**
die Anodenringe (3) einen gleichen Radius aufweisen.

9. Kaltkathoden-Druckmessvorrichtung nach einem der vorhergehenden Ansprüche,
**dadurch gekennzeichnet, dass**
die Anodenringe (3) eine aus einem Stück ausgearbeitete, vorzugsweise ausgefräste oder ausgeschnittene, Anordnung bilden.

10. Kaltkathoden-Druckmessvorrichtung nach einem der vorhergehenden
Ansprüche,
**dadurch gekennzeichnet, dass**
im Bereich der Druckmessvorrichtung eine lokale Heizeinrichtung zum Erzeugen einer das Zündverhalten verbessernden lokalen Druckerhöhung angeordnet ist.

11. Kaltkathoden-Druckmessvorrichtung nach einem der vorhergehenden
Ansprüche,
**dadurch gekennzeichnet, dass**
die lokale Heizeinrichtung in Form eines Pirani-Sensors ausgebildet ist.

12. Kaltkathoden-Druckmessvorrichtung nach einem der vorhergehenden
Ansprüche,
**dadurch gekennzeichnet, dass**
das Kathodenpaar aus Edelstahl, elektropoliertem Edelstahl oder einem Zirkonium-, Titan- oder Tantal-Werkstoff besteht.
